## Europäisches Patentamt
## European Patent Office
## Office européen des brevets

(19)

(11) Veröffentlichungsnummer: **0 040 391**
**B1**

(12)
# EUROPÄISCHE PATENTSCHRIFT

(45) Veröffentlichungstag der Patentschrift:
**21.09.83**

(21) Anmeldenummer: **81103656.5**

(22) Anmeldetag: **12.05.81**

(51) Int. Cl.³: **C 04 B 35/46,** H 01 C 7/02,
H 01 B 1/08

(54) Keramisches Kaltleitermaterial.

(30) Priorität: **19.05.80 DE 3019098**

(43) Veröffentlichungstag der Anmeldung:
**25.11.81 Patentblatt 81/47**

(45) Bekanntmachung des Hinweises auf die Patenterteilung:
**21.09.83 Patentblatt 83/38**

(84) Benannte Vertragsstaaten:
**AT BE FR GB IT NL**

(56) Entgegenhaltungen:
**DE-A-2 753 766**

**CHEMICAL ABSTRACTS, Band 84, Nr. 16, 19. April 1976, Seite 666, Zusammenfassung 115.054x, COLUMBUS, Ohio (US)**

**CHEMICAL ABSTRACTS, Band 84, Nr. 20, 17. Mai 1976, Seite 578, Zusammenfassung 143.723h COLUMBUS, OHIO (US)**

**SIEMENS FORSCHUNGS- UND ENTWICKLUNGSBERICHTE, Band 8, Nr. 4, 1979 (DE) L. HANKE «Theorie der Sperrschichteffekte in halbleitender Bariumtitanat-Keramik», Seiten 209-213**

(73) Patentinhaber: **SIEMENS AKTIENGESELLSCHAFT,
Berlin und München Wittelsbacherplatz 2,
D-8000 München 2 (DE)**

(72) Erfinder: **Hanke, Leopold, Dr., Rosenweg 5,
D-8201 Beyharting (DE)**
Erfinder: **Schmelz, Helmut, Dr., Rudolf-Sieck-Strasse 14,
D-8210 Prien (DE)**

Keramisches Kaltleitermaterial

Die vorliegende Erfindung bezieht sich auf ein keramisches Kaltleitermaterial, wie im Oberbegriff des Patentanspruchs 1 angegeben. Ein derartiges Material ist aus der DE-A 27 53 766 oder auch aus der DE-B 23 08 073 grundsätzlich bekannt.

Die keramischen Kaltleiter (ceramic PTC), auf die sich die vorliegende Erfindung bezieht, bestehen im wesentlichen aus Bariumtitanat, das für sich genommen in oxidierender Atmosphäre gesintert ein hochohmiges Dielektrikum ist. Durch die bekannte Zugabe von Donator-Dotierungsmitteln, wie z.B. Antimon, Niob, Yttrium, Lanthan und andere seltene Erden bzw. Lanthaniden oder Wismut, lässt sich jedoch das Bariumtitanat für die Verwendung als keramischer Kaltleiter leitfähig machen, und zwar mit dem für einen solchen Kaltleiter als Widerstand mit positivem Temperaturkoeffizienten (PTC) bekannten starken Anstieg des spezifischen elektrischen Widerstandes des Materials in einem engen Bereich, nämlich bei der Curie-Temperatur des Materials. Akzeptoreigenschaften bewirken Kupfer, Kobalt, Nickel, Chrom, Vanadium, Eisen oder Mangan.

Mit wie angegebener Dotierung erreichbare spezifische Kalt-Widerstandswerte des keramischen Kaltleitermaterials liegen bei mindestens etwa 10 Ohm.cm, da noch höhere Konzentrationen wieder zu einem Anstieg des Widerstandes führen. Dies hängt – wie festgestellt – mit der Behinderung des Kornwachstums bei der Sinterung durch mit hohem Anteil enthaltene Dotierstoffe zusammen. Auch bei derart hochdotiertem Bariumtitanat entstehen nämlich bei hohen Temperaturen Barium-Leerstellen, die die Wirkung der Dotierung kompensieren können und an den Korngrenzen angereichert sind, so dass hochohmige Randschichten in den einzelnen Kristalliten ausgebildet werden. Diese Randschichten sind einerseits zwar für den eigentlichen Kaltleitereffekt notwendig, erstrecken sich aber andererseits bei Korngrössen unter ca. 1 μm über das gesamte Kornvolumen, so dass überhaupt keine Leitfähigkeit mehr auftreten kann, wie dies z.B. aus «Siemens Forschungs- und Entwicklungsberichte», Bd. 8 (1979) Nr. 4, S. 209 ff. hervorgeht.

Aus der DE-B 23 08 073 und aus der DE-A 27 53 766 gehen nicht nur Einzelheiten zur Herstellung eines dem Oberbegriff zugrundegelegten Kaltleitermaterials hervor, sondern es sind dort auch erreichte elektrische Werte angegeben, und zwar insbesondere Kalt-Widerstandswerte zusammen mit Werten, die auf Spannungsfestigkeit und/oder Belastungsfähigkeit des Materials hinweisen. Der Kalt-Widerstandswert geht dort für je eine Probe bis auf 15 bzw. 18 Ohm.cm herab, liegt aber überwiegend bei erheblich höheren Werten.

Auch die DE-B 12 15 430 beschreibt Kaltleitermaterial, und zwar mit Dotierung durch Antimon, wobei der Antimongehalt auf den Titangehalt des Grundmaterials aus Barium-Strontium-Titanat bezogen ist. Bei der Herstellung wird dieses Material oxidierend gesintert. Ein solches bekanntes Kaltleitermaterial hat einen Höchstwert des maximalen Widerstandsverhältnisses, der überraschend wenig von der Curie-Temperatur dieses Materials abhängt und bei etwas über 4 Zehnerpotenzen liegt.

Bei vielen Anwendungen sind Kaltleiter mit geringem Kalt-Widerstand erwünscht. Unter Kalt-Widerstand ist der Widerstandswert bei der normalen Betriebstemperatur, z.B. Zimmertemperatur oder 25°C, d.h. bei einer Temperatur weit unter der Bezugs- bzw. Curie-Temperatur, zu verstehen. Derartige niedrige Widerstände wurden für einzelne Kaltleiter-Bauelemente dadurch erreicht, dass man den Kaltleiterkörpern entsprechend grössere Scheibenfläche und geringere Dicke gegeben hat. Dies führte zu grossem Raumbedarf.

Aus «Chemical Abstracts», Bd. 84 (1976), S. 666, Nr. 115054x ist bekannt, an Bariumtitanat-Halbleitermaterial nachträglich den spezifischen Widerstand desselben zu verändern. Man geht dort somit von einem fertig gesinterten Kaltleitermaterial mit einer bestimmten Korngrösse aus, die durch das vorangehend abgelaufene Herstellungsverfahren und die enthaltene Dotierung nachfolgend unveränderlich vorgegeben ist. Für die nachträgliche Widerstandsveränderung wird vorgeschlagen, das Material zunächst in reduzierender und dann in oxidierender Atmosphäre zu brennen. Die Reduktion führt (erwartungsgemäss) zu verringertem spezifischen Widerstand (2,51 Ohm.cm), bei allerdings nur noch weniger als 5 V/mm Spannungsfestigkeit, d.h. unter praktisch völligem Verlust des Kaltleitereffekts. Das Wiederaufoxidieren führt je nach Temperatur erst dann wieder zu nennenswerter Spannungsfestigkeit und Kaltleitereffekt (Temperaturkoeffizient $T_K$ des Widerstandes), wenn so stark reoxidiert worden ist, dass auch der spezifische Widerstand des Materials wieder auf hohe Werte, z.B. $7,90.10^3$ Ohm.cm (mit $T_K = 21,4\%$) und 80,0 (mit $T_K$ 13,5%), angestiegen ist. Dies gibt den Hinweis, dass sich mit Reduktion und Reoxidation zwar der spezifische Widerstand nachträglich ändern lässt, dass dies aber nicht zu einem Material führt, das sowohl einen niedrigen spezifischen Widerstand als auch wesentlichen Kaltleitereffekt hat.

Aus «Chemical Abstracts», Bd. 84 (1976), und zwar Seite 578, Nr. 143723h ist halbleitendes Bariumtitanat mit positivem Temperaturkoeffizienten mit 6,1 Ohm.cm bei einer Spannungsfestigkeit von 29 Volt pro Millimeter und mit 5 Ohm.cm bei sogar nur noch 14 Volt pro Millimeter bekannt. Auch dieses Ergebnis zeigt, dass auch hier wiederum Niederohmigkeit durch wesentlichen Verlust an Spannungsfestigkeit bzw. Kaltleitereffekt erkauft worden ist, wobei insbesondere der starke Abfall von 29 auf nur noch 14 V/mm bei nur noch 20%iger Verminderung des spezifischen Widerstands von 6 auf 5 Ohm.cm auffällt.

Aus der DE-B 26 26 513 geht ein Verfahren zur Herstellung weiteren Kaltleitermaterials hervor, bei dem eine gezielte Einstellung vorgegebener elektrischer Werte von Kaltwiderstand, Widerstandsanstieg oder Spannungsfestigkeit durch entsprechende Wahl der Aufheiz- und Abkühlgeschwindigkeit im Herstellungsverfahren erreicht wird. Angegebene Kaltwiderstandswerte liegen dort noch bei 18 Ohm.cm und im Regelfall erheblich darüber.

Es ist eine Aufgabe der vorliegenden Erfindung, ein keramisches Kaltleitermaterial dahingehend zu verbessern, dass es einen vergleichsweise zum Stand der Technik niedrigeren Kalt-Widerstand ohne wesentliche Beeinträchtigung des Kaltleitereffekts hat.

Diese Aufgabe wird mit einem Kaltleitermaterial nach dem Oberbegriff des Patentanspruchs 1 erfindungsgemäss nach dem Kennzeichen des Patentanspruchs 1 gelöst.

Die vorliegende Erfindung ermöglicht es, eine höhere als bisher verwendete effektive Dotierung vorzusehen und das grobe Korngefüge des Kaltleitermaterials beizubehalten. Bei der Erfindung greifen die nachfolgend zum Herstellungsvorgang angegebenen Massnahmen bereits im Stadium des (beginnenden) Ablaufs des Sinterprozesses ein, d.h. bevor und/oder während sich der Kaltleitereffekt gefügemässig und dotierungsgemäss ausbildet. Im Herstellungsgang des Bariumtitanats ist reduzierende Atmosphäre vorzusehen, die das Bariumtitanat durch Reduktion leitfähig macht, wobei entstehende Sauerstoff-Leerstellen als Dotierung wirken. Da unter diesen Bedingungen praktisch keine Barium-Leerstellen auftreten, die zu hochohmigen Randschichten führen können, wird mit dieser Massnahme selbst feinkörniges Material leitfähig. Ein solches Material zeigt aber keinerlei Eigenschaften, die für keramisches Kaltleitermaterial wenigstens charakteristisch sind. Bezüglich einer Anwendung reduzierender Atmosphäre liegen daher Betrachtungen ausserhalb solcher Überlegungen, die Kaltleiter betreffen.

Mit der Erfindung wurde nun aber gefunden, dass durch wenigstens zeitweise Sinterung in reduzierender Atmosphäre auch in hochdotiertem Bariumtitanat ein für die Kaltleiter-Bedingungen an sich ausreichendes Kornwachstum erzielt werden kann. Ein solches reduzierend gebranntes hochdotiertes Bariumtitanat hat jedoch, nämlich aus den oben erwähnten Gründen, keinerlei Kaltleitereigenschaften. Ein wesentlicher weiterer Gedanke der Erfindung ist der, dieses relativ grobkörnige Keramikmaterial einer weiteren Temperaturbehandlung zu unterziehen, die in oxidierender Atmosphäre durchgeführt wird und durch die im hochdotierten Bariumtitanat zuvor entstandene Sauerstoff-Leerstellen wieder beseitigt und Barium-Leerstellen in einer solchen räumlichen Verteilung gebildet werden, wie dies für Kaltleitermaterialien bekannt und notwendig ist. Dabei kann diese oxidierende Behandlung dieses weiteren Erfindungsschrittes entweder in einem eigenen Temperaturprozess (nachträglich) vorgenommen werden oder sie kann auch schon während der Abkühlphase nach Ablauf des eigentlichen Sintervorganges des Keramikmaterials erfolgen. Wesentlich ist für beide Alternativen, dass die während des Vorliegens der oxidierenden Atmosphäre eingehaltenen Temperaturen so weit unter der Sintertemperatur des Materials liegen, dass sich das bei den Sintertemperaturen in reduzierender Atmosphäre gebildete grobteilige Gefüge der Keramik nicht mehr ändert und ändern kann. Weil die Beweglichkeit der Barium-Leerstellen im Kristallgitter des Bariumtitanats wesentlich geringer als die der Sauerstoff-Leerstellen ist, lässt sich das der Erfindung immanente Ziel erreichen, die Sauerstoff-Leerstellen des zunächst vorgenommenen Verfahrensschrittes in reduzierender Atmosphäre wieder weitgehend quantitativ zu beseitigen. Dabei können optimale Ergebnisse durch zeit- und/oder temperaturabhängige Wahl des Sauerstoffpartialdrucks während des (Wieder-)Oxidationsvorgangs erreicht werden.

Die in der eigentlichen Sinterphase gemäss dem anfänglichen Erfindungsschritt wenigstens zeitweise, insbesondere mit Einschluss des Endes der Sinterphase, vorgesehene reduzierende Atmosphäre dient, darauf sei hier ausdrücklich hingewiesen, bei der Erfindung – im Gegensatz zum Stand der Technik, wo damit hohe elektrische Leitfähigkeit erzielt werden soll – dazu, ein grobes Gefüge des Keramikmaterials zu erreichen. Der niedrige spezifische Kaltleiter-Widerstand des fertigen Materials, das zudem auch die geforderten Kaltleitereigenschaften hat, wird durch die hohe Dotierungskonzentration und durch die nachfolgend unterhalb der Sintertemperaturen durchgeführte Oxidation erreicht.

Weitere Erläuterungen der Erfindung gehen aus der Beschreibung zu den Figuren hervor.

Fig. 1 zeigt ein Flussdiagramm der erfindungsgemässen Herstellung eines Kaltleitermaterials,

Fig. 2a zeigt ein Diagramm des grundsätzlichen Verlaufs und

Fig. 2b zeigt das Diagramm eines praktischen Ausführungsbeispiels für den Sauerstoffpartialdruck und die Temperatur, aufgetragen über der Zeitachse.

Fig. 2c zeigt eine Variante zu Diagrammen der Fig. 2a und 2b.

Fig. 3 zeigt ein Widerstandsdiagramm.

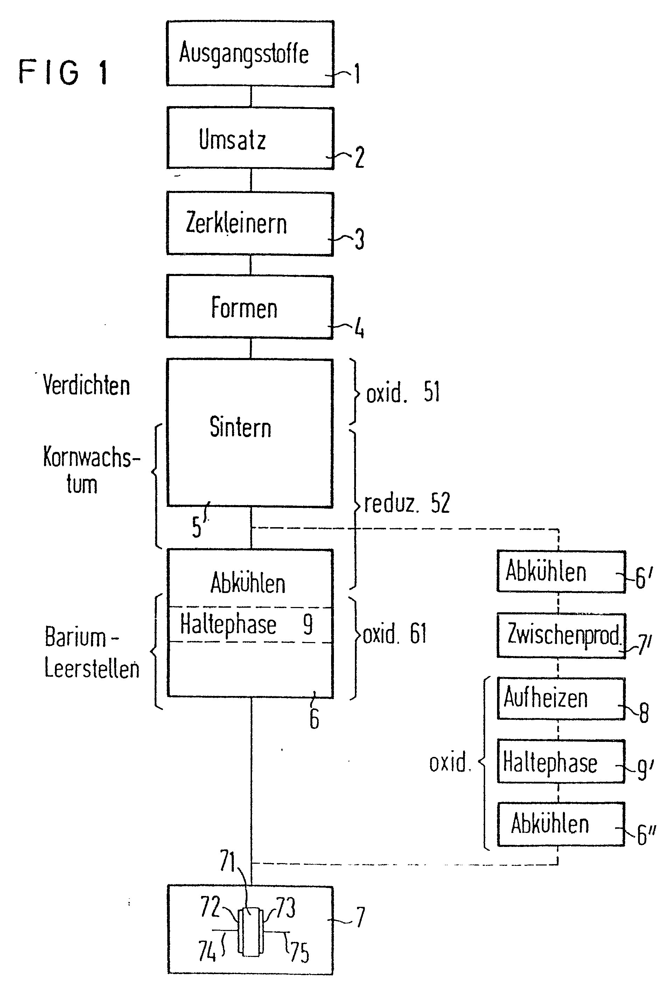

In Fig. 1 ist mit 1 der Verfahrensschritt bezeichnet, in dem die Mischung der Ausgangsstoffe wie Bariumkarbonat, Titandioxid und zugegebene Dotierungsmittel durchgeführt wird. Der Verfahrensschritt 2 gibt den an sich bekannten Umsatz der Ausgangsstoffe zu dotiertem Bariumtitanat an. Mit 3 ist der Verfahrensschritt des Wiederzerkleinerns der Umsatzmasse angegeben und im Verfahrensschritt 4 erfolgt das Pressen der Formkörper aus der mit Bindemittel versetzten zerkleinerten Masse des Schrittes 3. Mit 5 ist auf den Sinterprozess hingewiesen. Der Verfahrensschritt 6 gibt das Abkühlen der gesinterten Formkörper an, wobei bei der Erfindung gegebenenfalls eine Haltephase bzw. Verweildauer 9 bei vergleichsweise zur Abkühlgeschwindigkeit im wesentlichen konstantem Temperatur vorgesehen sein kann. Mit 7 ist auf die fertigen, nach der Erfindung hergestellten Kaltleiter hingewiesen.

Rechtsseitig von diesem Flussdiagramm sind die Intervalle der jeweils vorliegenden Atmosphäre angedeutet. Während der Sinterphase mit Oxidation 51 erfolgt im wesentlichen die Verdichtung des Materials der gepressten Formkörper, womit weitgehende Porenfreiheit erreicht wird. Mit 52 ist die gemäss einem Merkmal der Erfindung vorgesehene reduzierende Atmosphäre angegeben, die beginnend während des Sinterprozesses 5 bis in die Abkühlphase 6 hineinreichend vorhanden ist. Mit 61 ist auf die gemäss einem weiteren Merkmal der Erfindung vorgesehene oxidierende Atmosphäre hingewiesen, wobei das Flussdiagramm sich auf die Alternative bezieht, bei der dieser Verfahrensschritt der nachträglichen Oxidation in das Herstellungsverfahren integriert ist.

Linksseitig ist (nochmals) auf die während der Vorgänge 51, 52 und 61 im Material ablaufenden Prozesse hingewiesen.

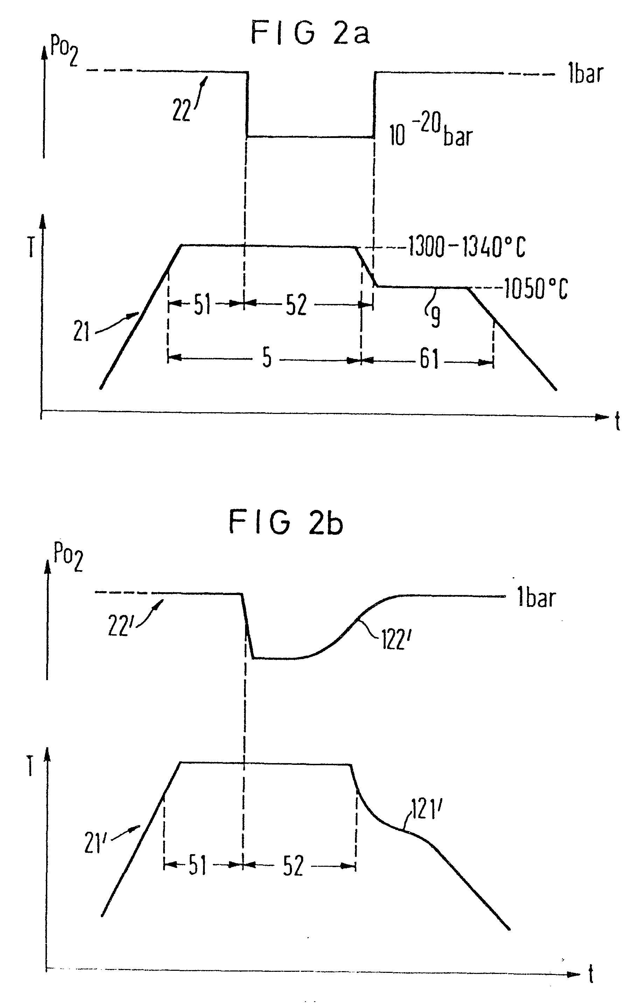

Die Fig. 2a und 2b geben die beiden erwähnten Diagramme mit der Zeit als Abszisse und mit der Temperatur für die Kurven 21 und 21' und dem Sauerstoffpartialdruck der Kurve 22 und 22' jeweils als Ordinate wieder. Die angegebenen Zahlenwerte sind Beispiele, mit denen vor allem die jeweilige Grössenordnung rasch zu erkennen ist.

Die Kurven 21 und 21' geben schematische Temperaturverläufe an, zu denen die jeweils vorliegende Atmosphäre 51, 52 und 61, wie bereits beschrieben, vorzusehen ist. Die gestrichelten Anfangs- bzw. Endbegrenzungen der Intervalle 51 und 61 deuten darauf hin, dass diese Grenzen weder exakt bestimmt sind noch für die Erfindung besonders kritisch sind. Die Überlappungen der einzelnen Phasen, z.B. 5, 61 und 52 lassen die wesentlichen Gedanken der Erfindung auch aus den Figuren gut erkennen.

Zum Beispiel ist in der Fig. 2b auf den vorgesehenen zeitabhängigen Verlauf des Sauerstoffpartialdruckes 122' und des Temperaturverlaufes 121' hinzuweisen. Durch Wahl des zeitlichen Verlaufes 121' und des zeitlichen Verlaufes 122' sowie insbesondere durch aufeinander abgestimmte Wahl dieser beiden zeitlichen Verläufe lassen sich die Kaltleitereigenschaften eines nach dem Verfahren hergestellten niederohmigen Kaltleitermaterials noch in Feinheiten (weiter) variieren.

In der Fig. 1 ist in dem Kästchen 7, das auf den fertigen Kaltleiter hinweist, ein solcher abgebildet. Mit 71 ist ein Kaltleiter-Plättchen 71 in Seitenansicht wiedergegeben. Auf den Oberflächen des Plättchens befinden sich Elektroden 72 und 73 aus einen sperrfreien Kontakt mit dem Kaltleitermaterial bildendem Aluminium. Mit 74 und 75 sind Anschlussdrähte angegeben.

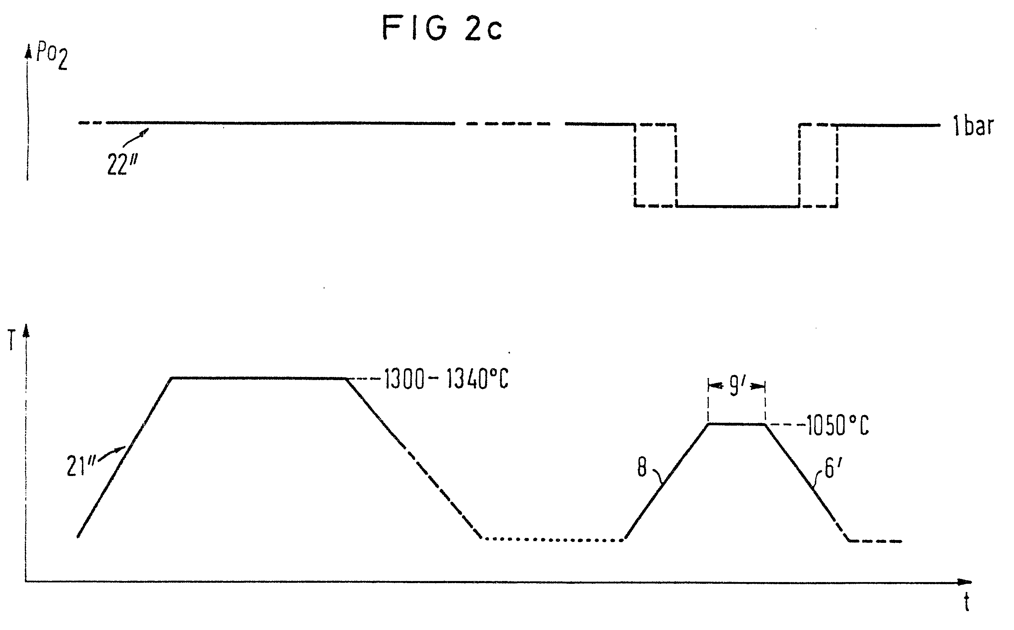

In der Fig. 1 ist noch die Alternative mit nachträglichem Wiederaufheizen 8 und Wiederabkühlen 6" in oxidierender Atmosphäre 61 angegeben. Bei dieser Alternative erhält man nach dem Sintern 5 und dem Abkühlen 6' ein Zwischenprodukt 7', das zunächst noch keine Kaltleitereigenschaft hat. Diese Kaltleitereigenschaft liegt aber dann bei dem gemäss Kästchen 7 zu erhaltenden Produkt vor. 9' weist auf eine gegebenenfalls vorgesehene Haltephase. Fig. 2c zeigt ein dieser Alternative entsprechendes Zeitdiagramm für die Temperatur 21" und den Sauerstoffpartialdruck 22".

Nachfolgend wird ein Ausführungsbeispiel zur Erfindung gegeben. Die Zusammensetzung dieses Ausführungsbeispiels enthält 98 Atom% Barium und 102 Atom% Titan. Die beste Kombination von Kalt-Widerstand und Kaltleiterverhalten wurde mit 2 Atom% Yttrium als weiterem Bestandteil erreicht, wobei Yttrium auch zwischen 0,5 und 5 Atom% variiert werden kann. Weiterer Bestandteil ist 0,2 Atom% Mangan, der zwischen 0 und 1 Atom% variiert werden kann. Weiter ist bei der Masse des Ausführungsbeispiels 1 Atom% Silizium enthalten. Ohne dieses Silizium ist zwar eine höhere Steilheit des Widerstandsanstiegs zu erreichen, jedoch ist eine Einbusse bezüglich des Varistoreffekts dann hinzunehmen. Der Rest der angegebenen Zusammensetzung ist Sauerstoff.

Die diese voranstehende Zusammensetzung ergebende Ausgangsstoffe werden nach Mahlen und Mischen bei Temperaturen zwischen 1000° und 1150°C, vorzugsweise bei 1050°C, umgesetzt, und zwar vorzugsweise 4 Stunden lang. Die Umsatzdauer kann zwischen zwei und zehn Stunden variiert werden und ist zudem abhängig von der eingesetzten Menge.

Nachfolgend werden nähere Angaben zum Sinterprozess gemacht, mit dem ein Kaltleitermaterial der obengenannten Zusammensetzung hergesellt wurde, das die nachfolgenden technischen Daten hat:

$\varrho_{25°C}$ 5 Ohm.cm, / $\varrho_{max}/\varrho_{min}$ ungefähr $10^4$
$\varrho_{max}$ (40 V/mm) / $\varrho_{max}$ (1 V/mm) = 60%
( = Belastungskoeffizient)

Bezugstemperatur, bei der der spezifische Widerstand $\varrho$ auf das 2fache des Wertes $\varrho_{min}$ angestiegen ist, = 120°C (etwa gleich der Curie-Temperatur).

Zur Durchführung dieses Sinterverfahrens erfolgte ein Aufheizen im Sauerstoff-Strom mit einem Partialdruck $p_{0_2}$ = ungefähr 1 bar mit einer Aufheizgeschwindigkeit von 3 bis 10 K/min, vorzugsweise 5 K/min. Ab Erreichen der Sintertemperatur von 1300 bis 1340°C wird zum Übergang vom Vorgang 51 zum Vorgang 52 eine Spülung des Sinterofens mit reinem Stickstoff oder eine Evakuierung des Ofens vorgenommen, bis der Sauerstoffpartialdruck $p_{0_2}$ auf unter 0,01 bar abgesunken ist. Dies ist notwendig, damit bei dem nachfolgenden Einleiten von Formiergas (Gemisch von Stickstoff und Wasserstoff) keine Explosion auftritt. In der Formiergas-Atmosphäre sinkt der Sauerstoffpartialdruck bis 10⁻²³ bar ab. In dieser Phase des Vorgangs 52 wird 30 min lang auf der oben angegebenen Sintertemperatur gesintert. Dann erfolgt das Abkühlen, und zwar weiter in Formiergas-Atmosphäre, mit einer Abkühlgeschwindigkeit von 3 bis 15 K/min, vorzugsweise mit 10 K/min. Die oben erwähnte Haltephase 9 mit im wesentlichen konstant bleibender Temperatur wird bei 900 bis 1200°C, vorzugsweise bei 1050°C, eingelegt, und dauert 1 bis 10 Stunden, vorzugsweise 2 Stunden.

Nach Ablauf der Haltephase 9 erfolgt wieder eine Spülung des Ofens mit reinem Stickstoff (zur Vermeidung von Explosionen) und der Übergang zur Sauerstoff-Atmosphäre mit $p_{O_2} = 1$ bar. Die weitere Abkühlung lässt man mit der normalen Abkühlung des Ofens mit etwa 5 K/min ablaufen.

Die bereits oben erwähnte zweite Alternative mit getrenntem Temperprozess hat den Vorzug, dass man in Formiergas-Atmosphäre bis praktisch zur Zimmertemperatur abkühlen kann und dann ohne Explosionsgefahr die neue Aufheizung gemäss Verfahrensschritt 8 in Fig. 1 ohne besondere Spülung gleich in Sauerstoff-Atmosphäre ablaufen lassen kann.

Die als bevorzugt angegebenen Werte gehören zu ein und demselben Ausführungsbeispiel. Die angegebenen Bereiche betreffen jeweils andere Ausführungsbeispiele der Erfindung.

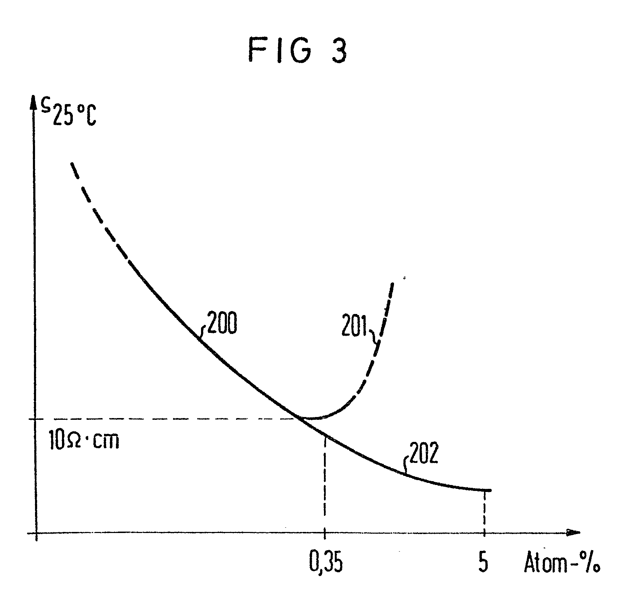

Das im Oberbegriff des Patentanspruchs 1 mit der allgemeinen Formel angegeben Kaltleitermaterial hat bei der vorliegenden Erfindung gemäss dem Kennzeichen des Patentanspruchs 1 eine vergleichsweise zum Stand der Technik höhere effektive Donator-Dotierung. Wie angegeben ist im Regelfall auch eine Akzeptor-Gegendotierung vorhanden, jedoch in nur solchem Masse, dass das Kaltleitermaterial im Ergebnis N-leitend ist. Die wirksame Differenz zwischen Donator-Dotierung und Akzeptor-Dotierung ist die effektive Dotierung, die bei der vorliegenden Erfindung höher als bisher nach dem Stand der Technik üblich und auch möglich war. Die Fig. 3 zeigt in einem der weiteren Erläuterung dienenden Diagramm auf der Ordinate aufgetragen den spezifischen Kaltleiter-Widerstand $\varrho_{25°C}$ des Kaltleitermaterials. Auf der Abszisse ist das Mass der effektiven Dotierung entsprechend der obigen Erläuterung angegeben. Die eingetragene Kurve 200 mit dem Wiederanstieg des spezifischen Widerstandes oberhalb einer Dotierung von 0,35 Atom% entspricht dem Stand der Technik, der bei für einen Kaltleiter bekannter Art zu hoher Dotierung auftritt. In dem weiter gestrichelt dargestellten Bereich 201 kann man bereits nicht mehr von Kaltleitereigenschaft sprechen. Der oberhalb von 0,35 Atom% eingetragene Kurvenzug 202, nämlich zwischen 0,35 und 5 Atom% Dotierung, entspricht der Erfindung. Der Unterschied der Kurvenzüge 202 und 201 lässt deutlich die Besonderheit der Erfindung erkennen, nämlich es ist im Bereich dieser effektiven Dotierung noch niedrigerer spezifischer Kalt-Widerstand bei Aufrechterhaltung der Kaltleitereigenschaft infolge aufrechterhaltenen Korngefüges desselben erreicht.

Die effektive Dotierung ist die sich im Ergebnis auswirkende Dotierung, die in nur grober Näherung gleich der Differenz der Donator- und der Akzeptor-Dotierung ist.

### Patentansprüche

1. Keramisches Kaltleitermaterial auf der Basis von Bariumtitanat der allgemeinen Formel

$(Ba_{1-x}M^{II}_x)O \cdot z(Ti_{1-y}M^{IV}_y)O_2$;
mit $M^{II}$ = Ca, Sr, Pb und/oder Mg und $M^{IV}$ = Zr, Sn,

wobei z die Werte 1,005 bis 1,05 einnimmt, das einen oder mehrere verschiedene Dotierungsstoffe enthält, von denen einer (Antimon, Niob, Wismut, Yttrium, Lanthan oder Lanthanide) im Innern der Kristallite überwiegend Donatoreigenschaft und ein anderer (Kupfer, Kobalt, Nickel, Chrom, Vanadium, Eisen oder Mangan) Akzeptoreigenschaft hat, und das durch Umsatz der Ausgangsstoffe, Wiederzerkleinern des Umsatzprodukts, Formen und Sintern der Formkörper hergestellt ist,
gekennzeichnet durch die folgenden Merkmale:
a) Im Kaltleitermaterial ist Dotierungsstoff mit Akzeptoreigenschaft mit einer Gesamtkonzentration von 0 bis 2 Atom% enthalten;
b) Im Kaltleitermaterial ist soviel Dotierungsstoff mit Donatoreigenschaft vorhanden, dass die effektive Konzentration des im Perowskit-Gitter eingebauten gesamten Dotierungsstoffes unter Erhaltung der Grobkörnigkeit 0,35 bis 5 Atom% beträgt;
c) Die Dotierungsstoff-Anteile sind so bemessen, dass N-Leitung im Kaltleitermaterial mit einem spezifischen Kalt-Widerstand von weniger als 10 Ohm·cm, gemessen bei 25°C, vorliegt;
d) Das Sintern (5) ist während eines solchen Zeitraums (52) in einer das Bariumtitanat reduzierenden Atmosphäre durchgeführt worden, dass ein ausreichendes Kornwachstum erzielt worden ist;
e) Nach Abkühlung auf Temperaturen unterhalb der Sintertemperatur ist ein Temperprozess in oxidierender Atmosphäre (6,61; 8,6″, 61) durchgeführt worden, bis sich die für das Auftreten der Kaltleitereigenschaft ausreichende Anzahl von Barium-Leerstellen im Material gebildet hat.
2. Keramisches Kaltleitermaterial nach Anspruch 1, gekennzeichnet dadurch, dass der Temperprozess in oxidierender Atmosphäre (61) in den Verfahrensschritt des Abkühlens (6) nach dem Sinterschritt integriert worden ist.
3. Keramisches Kaltleitermaterial nach Anspruch 1, gekennzeichnet dadurch, dass der Temperprozess in oxidierender Atmosphäre mit einem nach Sinterung (5) und Abkühlung (6′) erhaltenen Zwischenprodukt (7′) mit Aufheizen (8) und Wiederabkühlen (6″) in oxidierender Atmosphäre (61) durchgeführt worden ist.

4. Keramisches Kaltleitermaterial nach einem der Ansprüche 1, 2 oder 3, gekennzeichnet dadurch, dass während des Temperprozesses (6; 8, 6″) in oxidierender Atmosphäre (61) ein sich zeitabhängig ändernder Sauerstoffpartialdruck (122′) eingestellt worden ist.

**Revendications**

1. Matériau céramique pour conducteur à coefficient de température positif, à base de titanate de baryum de formule générale

$(Ba_{1-x}M^{II}_x)O \cdot Z(Ti_{1-y}M^{IV}_y)O_2$;
avec $M^{II}$ = Ca, Sr, Pb et/ou Mg et $M^{IV}$ = Zr, Sn,

Z prenant les valeurs 1,005 à 1,05, qui contient une ou plusieurs substances de dopage différentes, parmi lesquelles l'une (antimoine, niobium, bismuth, yttrium, lanthane ou lanthanide) à l'intérieur des cristallites, a principalement une propriété de donneur, et une autre (cuivre, cobalt, nickel, chrome, vanadium, fer ou manganèse) a une propriété d'accepteur et qui est préparé par réaction des matières de départ, refragmentation du produit de réaction, mise en forme et frittage du corps mis en forme, remarquable par les caractéristiques suivantes:

a) dans le matériau pour conducteur à coefficient de température positif, il y a de la substance de dopage à propriété d'accepteur en une concentration totale comprise entre 0 à 2% en atome;

b) dans le matériau pour conducteur à coefficient de température positif, il y a suffisamment de substance de dopage ayant une propriété de donneur, pour que la concentration effective de la totalité de la substance de dopage incorporée dans le réseau pérowskitique soit comprise entre 0,35 et 5% en atome, avec maintien de la granulométrie grossière;

c) les proportions de substance de dopage sont telles qu'il y a une conduction de type N dans le matériau pour conducteur à coefficient de température positif, avec une résistance spécifique à coefficient de température positif inférieure à 10 ohm.cm, mesurée à 25°C;

d) le frittage (5) a été effectué pendant une durée (52) telle, dans une atmosphère réduisant le titanate de baryum, qu'une croissance granulométrique suffisante a été atteinte;

e) après refroidissement à des températures inférieures à la température de frittage, un processus de recuit en atmosphère oxydante (6, 61; 8, 6″, 61) a été effectué jusqu'à ce que le nombre de vacances de baryum suffisant pour l'apparition de la propriété de conducteur à coefficient de température positif se soit formé dans le matériau.

2. Matériau céramique pour conducteur à coefficient de température positif suivant la revendication 1, caractérisé en ce qu'il consiste à intégrer le processus de recuit en atmosphère oxydante (61) dans le stade de refroidissement (6) du procédé, après le stade de frittage.

3. Matériau céramique pour conducteur à coefficient de température positif suivant la revendication 1, caractérisé en ce qu'il consiste à effectuer le processus de recuit en atmosphère oxydante avec un produit intermédiaire (7′) contenu après le frittage (5) et le refroidissement (6′), en chauffant (8) et en refroidissant à nouveau (6″) en atmosphère oxydante (61).

4. Matériau céramique pour conducteur à coefficient de température positif suivant l'une des revendications 1, 2 ou 3, caractérisé en ce qu'il consiste, pendant le processus de recuit (6; 8, 6″) en atmosphère oxydante (61), à établir une pression partielle d'oxygène (122′) se modifiant en fonction du temps.

**Claims**

1. A ceramic cold conductor material having a basis of barium titanate of the general formula:

$(Ba_{1-x}M^{II}_x)O \cdot z(Ti_{1-y}M^{IV}_y)O_2$:

where $M^{II}$ = Ca, Sr, Pb and/or Mg and $M^{IV}$ = Zr, Sn, where z covers the values 1.005 to 1.05, which material contains one or more different doping agents, one of which (antimony, niobium, bismuth, yttrium, lanthanum or lanthanide) essentially exhibits a donor characteristic within the crystallites, and another (copper, cobalt, nickel, chromium, vanadium, iron or manganese) an acceptor characteristic, and which material is produced by reacting the starting materials, repulverising the reaction product, moulding, and sintering the moulded body,
characterised by the following features:

a) the cold conductor material contains a doping agent which has an acceptor characteristic and an overall concentration of 0 to 2 atom%;

b) the cold conductor material contains a doping agent having a donor characteristic in an amount that the effective concentration of the total doping agent present in the perovskite lattice is 0.35 to 5 atom%, the coarseness of the grain being maintained;

c) the amounts of the doping agents are such that N-conduction is present in the cold conductor material which has a specific cold resistance of less than 10 Ohm.cm, measured at 25°C;

d) the sintering (5) has been carried out during such a period (52) in an atmosphere which will reduce the barium titanate, that an adequate grain growth has been achieved; and

e) after cooling to temperatures below the sintering temperature, an annealing step has been carried out in an oxidizing atmosphere (6, 61; 8, 6″, 61) until the number of barium vacancies adequate to produce the cold conductor characteristic, have formed in the material.

2. A ceramic cold conductor material as claimed in Claim 1, characterised in that the annealing step in an oxidising atmosphere (61) has been integrated into the cooling process step (6) following the sintering step.

3. A ceramic cold conductor material as claimed in Claim 1, characterised in that the annealing step in an oxidising atmosphere has been carried out with an intermediate product (7'), which is obtained after the sintering step (5) and the cooling step (6'), by a heating step (8) and a re-cooling step (6") in an oxidising atmosphere (61).

4. A ceramic cold conductor material as claimed in one of Claims 1, 2 or 3, characterised in that a partial oxygen pressure (122') varying in dependence on time has been set during the annealing step (6; 8, 6") in an oxidizing atmosphere.

FIG 1

Ausgangsstoffe — 1

Umsatz — 2

Zerkleinern — 3

Formen — 4

Verdichten

oxid. 51

Sintern

Kornwachs-tum

reduz. 52

5

Abkühlen — 6'

Abkühlen

Barium - Leerstellen

Haltephase 9

oxid. 61

Zwischenprod. — 7'

6

Aufheizen — 8

oxid. { Haltephase — 9'

Abkühlen — 6''

71

72 73

7

74 75

9

## FIG 2a

## FIG 2b

FIG 2c

# FIG 3